# EUROPEAN PATENT APPLICATION

(11) **EP 4 446 609 A1**
(43) Date of publication of application: **16.10.2024**
(21) Application number: 23167991.1
(22) Date of filing: 14.04.2023
(51) Int. Cl.: F16F 1/373, F16F 1/376, F16F 1/377, F16F 7/10, F16F 7/108, B62D 7/22, B60R 21/203

(54) **A DAMPER UNIT AND A DAMPER ASSEMBLY**

(71) Applicant: Vibracoustic Forsheda AB, 331 71 Forsheda (SE)
(72) Inventor: Andersson, Jonas, 331 30 Värnamo (SE)
(74) Representative: AWA Sweden AB

(57) **Abstract**

A damper unit (40) and a frequency-tuned vibration damper assembly for a steering wheel (2) are disclosed. An elastomeric damper element (70) of the damper unit has a plurality of mutually spaced, elongate ribs (72). An upper rib section (72b) is provided with a snap-lock protrusion (74). A lower rib section (72a) is configured to be brought into engagement with a horn plate (14) for transferring vibrations. Each rib (72) is provided with an upwardly open and downwardly closed inner cavity (80) located at least in part in the lower rib section (72a). Wall portions (84) of the ribs (72) are thereby elastically deformed by bending during the damping operation, resulting in an increased flexibility and lower tuning frequencies.

## Description

### TECHNICAL FIELD

The present disclosure generally relates to the field of frequency-tuned vibration dampers for motor vehicles. There is disclosed a damper unit for use in a vibration-reducing damper assembly for a steering wheel, and a frequency-tuned vibration-reducing damper assembly including one or more such damper units.

### BACKGROUND

The operation of frequency-tuned vibration dampers, also termed tuned mass dampers, or dynamic dampers, is based on a dampened spring-mass system which dynamically counteracts and reduces unwanted vibrations in a vibrating structure to which the dynamic damper is connected. One or more elastomeric damper elements are used to transfer the vibrations from the vibrating structure to a mass. The mass is thereby caused to vibrate with essentially the frequency of the unwanted vibrations of the vibrating structure, but out of phase, such as to dampen the unwanted vibrations. It should be noted that dynamic dampers are designed to actively transfer vibrations to make the suspended mass vibrate out of phase, in contrast to passive simple elastomeric bodies which are instead designed to prevent vibrations from being transferred, such as simple passive washing-machine foot pads preventing machine vibrations from being transferred into a floor structure.

In the automotive industry, steering wheels are typically provided with such frequency-tuned vibration dampers for reducing steering wheel vibrations caused by vibrations from the road or the engine. In such damper structures, the weight of an airbag module may be used as part of the mass in the dynamic spring-mass system. Such dampers are therefore sometimes referred to as "module dampers" indicating that the airbag module forms a functional part of the overall damper assembly. Further, steering wheels are generally provided with a horn activation mechanism by which a driver may activate a horn of the vehicle. A horn activation mechanism of mechanical type comprises one or more horn springs arranged to return a horn activation mechanism to its normal state after a completed horn activation.

WO 2019/129512 A1 discloses a dynamic vibration-reducing damper assembly for a steering wheel comprising a plurality of damper units. Each damper unit comprises an elastomeric damper element molded on a rigid sleeve-shaped slider. An airbag module is mounted on a horn plate. During assembly, an engagement surface of the elastomeric damper element is brought into engagement of an inner side of a mounting opening in the horn plate for transferring vibrations to the horn plate and the airbag module. The slider is slidably mounted on a guide shaft fixed to the steering wheel. Thereby, the horn plate is movable back and forth on the guide shafts during horn operation. Horn springs, one for each damper unit, are arranged to return the horn plate to its normal position after a completed horn operation. The elastomeric damper element of each damper unit presents a number of solid axial ribs of essentially triangular cross-section. The solid ribs together form the outer engagement surface of the elastomeric damper element, and also form a snap-lock for holding the damper unit in place.

Although the damper unit disclosed in WO 2019/129512 A1 has several advantages in terms of manufacturing, assembly and frequency tuning, there are room for improvements. It is difficult to frequency-tune present module dampers to lower frequencies, for instance below 35 Hz. In certain situations, the unwanted vibrations have a low frequency, for example around 35 Hz or below. In general, a stiffer damper structure in the damper unit will give a higher tuned frequency, and vice versa. Considering that the damper units are rather small devices (around a couple of centimeters in diameter), selecting a softer elastomeric material for the elastomeric damper element in order to arrive at a desired lower frequency may result in consequential problems: One such consequential problem is potential rupture of the softer elastomeric material when removing the damper unit from a manufacturing mold tool. Another potential consequential problem is that a damper element made from a softer elastomeric material is subject to be twisted or dislocated during mounting and/or operation. A further consequential problem is termed "static hang down". If a too soft elastomeric material is used for the damper element, the damper units may not be able to fully carry the weight of the airbag module in a correct way, resulting in a certain unwanted "hang down" of the horn plate and the airbag module. This may be a static vertical hang down, a static rotational hang down, or a combination thereof.

### SUMMARY OF INVENTION

In the light of the above, it is an object of the present inventive concept to provide an improved damper unit and an improved damper assembly, wherein the above-mentioned problem of designing dynamic frequency-tuned dampers to operate at lower frequencies is addressed.

According to a first aspect of the inventive concept, there is provided a damper unit for use in a frequency-tuned vibration damper assembly for a steering wheel, said damper unit extending along an axis between an insertion end and a rear end of the damper unit, said damper unit being configured to be inserted into a mounting opening provided in a horn plate of said damper assembly, and said damper unit comprising a slider having an axially extending inner bore, and an elastomeric damper element formed on an outer surface of the slider;
wherein the elastomeric damper element presents a plurality of ribs extending in an axial direction along said axis and being mutually spaced in a circumferential direction in relation to said axis, each rib of said plurality of ribs comprising, along its axial direction:
   0 an axially upper rib section provided with a snap-lock protrusion configured to snap-lock the damper unit in a final mounting position, and
   0 an axially lower rib section axially spaced from the insertion end of the damper unit, wherein the lower rib sections of said plurality of ribs together form an outer engagement surface of the damper unit configured to be brought into engagement with an inner surface of said mounting opening; and
wherein each rib is provided with an inner cavity, which is located at least in part in the lower rib section radially inside said outer engagement surface, and which is axially open towards the insertion end of the damper unit and axially closed towards the rear end of the damper unit.

In preferred embodiments, the inner cavity of each rib is defined at least in part by a radially outer wall portion of the rib radially spaced from the slider, and two circumferentially spaced side wall portions of the rib which extend from the outer wall portion towards the slider, wherein the radially outer wall portion and the two side wall portions of each rib are located at least in the lower rib section. During the damping operation, the two side wall portions of the rib are elastically deformed by bending, preferably outwards from the inner cavity, while the radially outer wall portion is in constant engagement with the horn plate in the mounting opening. In order to avoid wear and tear of the elastomeric material, there should preferably be no relative movement between the radially outer wall portion and the horn plate.

A damper unit in accordance with the inventive concept has the advantage that it may be frequency tuned to lower frequencies compared to previous module damper, with no or minor consequential problems regarding static hang down. The provision of an inner cavity in each rib of the elastomeric damper element, wherein the inner cavity is located at least in the lower rib section, has the advantage that the elastomeric damper as a whole becomes more flexible at least in the region where the damping operation mainly takes place, which is in level with the horn plate. More specifically, an increased flexibility is obtained in the radial plane perpendicular to the axis of the damper unit, i.e. in the plane where the vibrations occur. In the known damper unit using solid ribs, the elastomeric damper element operates by radial compression of the solid ribs. This results in a relatively stiff structure, which cannot be used for reaching lower tuning frequencies. In contrast, in the inventive damper unit using ribs with inner cavities, the whole rib becomes more flexible, and the damping deformation of the elastomeric damper is instead mainly bending of the two side wall portions of the ribs. Tuning parameters affecting the frequency includes, in addition to the Shore value of the elastomeric material as such, at least the wall thickness, curvature, length of the side wall portions in the radial plane, the width of the ribs in the circumferential directions, and the number of ribs.

As indicated above, a problem in the previous module dampers has been the challenge to reach lower frequencies while combining this with an elastomeric damper element which can handle the weight of the entire airbag module and the horn plate (static hang down should be avoided or at least limited). The applicant has established that the inventive damper assembly including the inventive damper units with ribs provided with inner cavities can be frequency-tuned to the desired lower frequencies, e.g. 30 Hz or below, with no or limited static hang down. Static hang down occurs mainly due to axial stretching of the elastomeric material, while the damping operation takes place in the radial plane. The inventive concept makes it possible to increase the flexibility in the radial plane without reducing the overall axial strength of the elastomeric damper element. Especially, the inventive elastomeric damper element with inner cavities formed in the ribs may be designed with an essentially non-reduced total volume of elastomeric material, thereby giving essentially no or limited loss in axial strength.

A damper unit in accordance with the inventive concept may be designed with a reduced number of ribs compared to known damper units. The ribs may also be wider/bigger in the circumferential direction, which increases the flexibility and at the same time assist in not reducing the axial stiffness. As a non-limiting example, the number of ribs may be six or less, preferably five or less.

In preferred embodiments, the radially outer wall portion and the two side wall portions of each rib extend axially also into the upper rib section, such that the inner cavity of each rib also extends axially from the lower rib section into the upper rib section. Preferably, the wall portions and the cavity extend all the way up to the distal end of the rib. The increased flexibility thereby obtained also in the upper rib section may assist in reaching lower tuning frequencies, and will also have the advantage that the upper rib section with its snap-lock protrusion will be more easily inserted into the mounting opening.

In some embodiments, the two side wall portions diverge in a circumferential direction from each other towards the slider. This design is opposite from the rib design in WO 2019/129512 A1, where each rib instead has a cross-sectional shape of an equilateral triangle pointing towards the slider, i.e. converging towards the slider. In preferred embodiments, the two side wall portions have a curved shape such that they will bend away from the inner cavity during deformation in the damping operation. This design may give an increased flexibility, and also an increased possible frequency tuning range. Also the radially outer wall portion may have a curved shape to form the engagement surface.

In some embodiments, the radially outer wall portion has a wall thickness which in the lower rib section increases towards the rear end of the damper unit. Such a change in wall thickness may be selected such that the wall thickness increases gradually towards the lower end of the rib. The design may be such that, as a result, the cross-section of the inner cavity in the radial plane decreases gradually towards the bottom of the inner cavity, for instance such that the bottom of the inner cavity is in the form of a rearward pointing tip. Such a design may have the following advantage: During assembly, the damper unit is inserted into a mounting opening in the horn plate. As a result, the lower rib section engages or comes in contact with the inside of the mounting opening of the horn plate. If the axial relative position between the damper unit and the mounting opening is incorrect, unwanted large changes in stiffness may occur. In some embodiments, a sleeve is arranged in the mounting opening of the horn plate for engaging the damper unit. If this sleeve is not placed optimally in the axial direction (i.e. too high or too low), the inclined shape of the lower rib section prevents an unwanted large change in stiffness from occurring (either higher stiffness or lower stiffness depending on direction). The inclined shape gives a gradual increase of stiffness towards the rear rib end. In alternative designs having an internal 90-degree corner and a constant wall thickness along the cavity, one may instead experience an unwanted large change in the stiffness, depending on the axial position of the damper unit in relation to the sleeve or horn plate. Such a sudden "jump" in stiffness could make the part instable. In the end, an inclined shape yields a more stable part.

In some embodiments, at least part of the inner cavity of each rib is further defined by a radially inner wall portion which is in contact with the outer surface of the slider. In such embodiments, the part of the inner cavity which is located in the lower rib section may thus be completely closed in the radial plane by the outer wall portion, the two side wall portions, and the inner wall portion. During manufacturing, the inner wall portion may be molded onto the slider. In embodiments including such radially inner wall portions, the radially inner wall portion of each rib may have a limited axial length such that the inner cavity is partly radially closed towards the slider, and partly radially open towards the slider.

In some embodiments, the inner cavity of each rib presents an axially closed cavity bottom located in the lower rib section. Below the cavity bottom, the lower rib section may comprise a volume of solid, cavity-free elastomeric material.

In preferred embodiments, the elastomeric damper element further comprises a plurality interconnecting wall portions, which are circumferentially arranged between and formed in one piece with the ribs. Each interconnecting wall portion interconnects a pair of circumferentially adjacent ribs. These interconnecting wall portions may have multiple advantages. One advantage is related to manufacture and mounting. The damper units are relatively small items, and the wall portions of the ribs may be relatively thin and easily breakable or deformable during molding and mounting. The interconnecting wall portions will stabilize the overall structure of the elastomeric damper element. A further advantage of the interconnecting wall portions is that they may act as a rigid "base" for the flexible side wall portions during bending of the wall portions of the rib. Especially, parts of the interconnecting wall portions that are located in the lower rib regions may be molded onto the slider. A still further advantage of the interconnecting wall portions is obtained in embodiments where the upper rib sections are radially spaced from the slider. In such embodiments, the upper rib sections may be held together in the circumferential direction by these interconnecting wall portions, which then also will be spaced from the slider in the upper rib section. From a visual perspective, the outer wall portions, the side wall portions, and the intermediate interconnecting wall portions of the damper unit may thus together form an undulating, continuous wall extending 360 degrees around the axis, forming alternating, and axially extending valleys and ridges.

In some embodiments, the inner cavity of at least some of the ribs, as seen in a radial cross section perpendicular to said axis, may diverge towards the slider. This may have the advantage to control the bending of the side wall portions.

In preferred embodiments, the elastomeric damper element further comprises an elastomeric support part located at the rear end of the damper unit, wherein the radially outer engagement surface of the damper unit has a first radial dimension, and the elastomeric support part has a second radial dimension, larger than said first radial dimension, whereby the elastomeric support part is arranged to define a final mounting position of the damper unit.

According to a second aspect of the inventive concept, there is provided a frequency-tuned damper assembly for dampening vibrations in a steering wheel, comprising:
a base structure which is fixed to a steering wheel;
a horn plate;
one or more damper units according to any of claims 1 to 13, each damper unit being arranged in an associated mounting opening in the horn plate with its outer engagement surface in engagement with the horn plate for transferring said vibrations to the horn plate;
one or more guide shafts, each guide shaft being fixed to the base structure and being received in the central bore of the slider of an associated damper unit; and
an airbag module which together with the horn plate forms a mass which is supported by the base structure via the damper units for allowing movement of the mass transverse to said axis,
wherein the damper element and the mass are configured to operate as a frequency-tuned spring-mass system for dynamically dampening vibrations in the base structure.

In preferred embodiments, the damper assembly further comprises a plurality of horn springs, wherein each horn spring is in engagement with an associated damper unit for moving the damper unit back to its normal position on the slider after a completed horn operation.

### Terminology

In the present disclosure, the terms "upper" and "lower" should be interpreted as distal and proximal, respectively, in relation to the insertion direction of the damper unit. Thus, the axially upper rib section is a distal section of the rib located towards the insertion end of the damper unit, and the axially lower rib section is a proximal section of the rib located towards the rear end of the damper unit.

In the present disclosure, the term rib should be interpreted as an elongate elastomeric element extending along the axis of the damper unit and protruding in the radial direction in relation to the axis. The ribs may alternatively be termed legs or ridges.

In the present disclosure, when an elastomeric element is stated to be molded on the slider it should be interpreted as the relevant element is first of all a molded detail being manufactured by molding. Second, the expression molded on is to be interpreted as the relevant element is molded directly on the slider. In preferred embodiments, the elastomeric material includes silicone rubber.

In the present disclosure, the expression "in contact with the rear side of the horn plate" is to be interpreted as covering both direct contact with the metallic horn plate as well as direct contact with a sleeve fixed to the metallic horn plate around the mounting opening for the damper unit.

In the present disclosure, the terms bonded or similar is to be interpreted as a connection or attachment between the relevant element and the slider preventing the element from falling off from or being easily removed from the slider.

In the present disclosure, the term "snap-locking" and the like should be interpreted as a locking mechanism which results in a locking function as a result of the damper unit being inserted into its final mounting opening. Especially, the term should be interpreted to also cover embodiments where there is not necessarily a distinct "snap" occurring during the insertion but rather a gradual expansion/movement of the snap-lock protrusion.

### BRIEF DESCRIPTION OF THE DRAWINGS

The inventive concept, some non-limiting embodiments, and further advantages of the inventive concept will now be described with reference to the drawings in which:
- Fig. 1: is an exploded view of a vibration-reducing damper assembly attached to a steering wheel.
- Fig. 2: illustrates the damper assembly in larger scale.
- Figs 3: is a perspective view of the damper assembly in its assembled state.
- Fig. 4: is a perspective view of a damper unit.
- Fig. 5: is a top view of the damper unit.
- Figs 6A and 6B: are partially sectioned perspective views of the damper unit.
- Figs 7A and 7B: are partially sectioned perspective views of an elastomeric damper element.
- Fig. 8: is an axial sectional view of the damper unit.
- Fig 9A to 9D: are cross-sectional views of the damper unit taken at different axial levels.
- Figs 10A to 10F: illustrate an assembly method for making a damper assembly.
- Fig. 11: illustrates an alternative assembly method.
- Fig. 12: is a sectional view of a damper assembly.

### DETAILED DESCRIPTION OF A PREFERRED EMBODIMENT

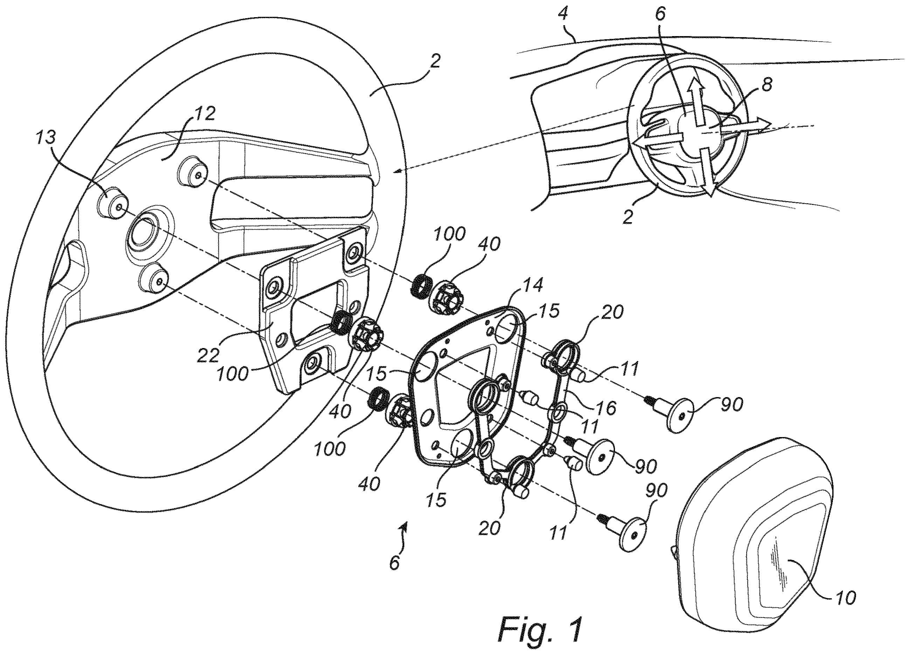

Fig. 1 illustrates a steering wheel 2 in a motor vehicle 4. Vibrations from the road and the engine may be transferred to the steering wheel 2. These steering wheel vibrations may be perpendicular to the steering column, as indicated by up-down and left-right arrows. The steering wheel 2 is provided with a frequency-tuned vibration-reducing damper assembly 6 configured to dynamically dampen such vibrations in the steering wheel 2.

As known in the art, the steering wheel 2 is provided with a horn activation mechanism. To this end, a horn activation pad 8 is arranged on the steering wheel 2 to be pressed by the driver upon horn activation. When the driver releases the horn activation pad 8, the horn activation mechanism returns to its non-activated or initial state by means of one or more horn springs.

An airbag module 10 forms part of the damper assembly 6, and the weight of the airbag assembly 10 forms part of the total weight of the mass used in the dynamic vibration-reducing spring-mass system. Thereby, the use of separate dead weights for this purpose may be avoided or substantially reduced.

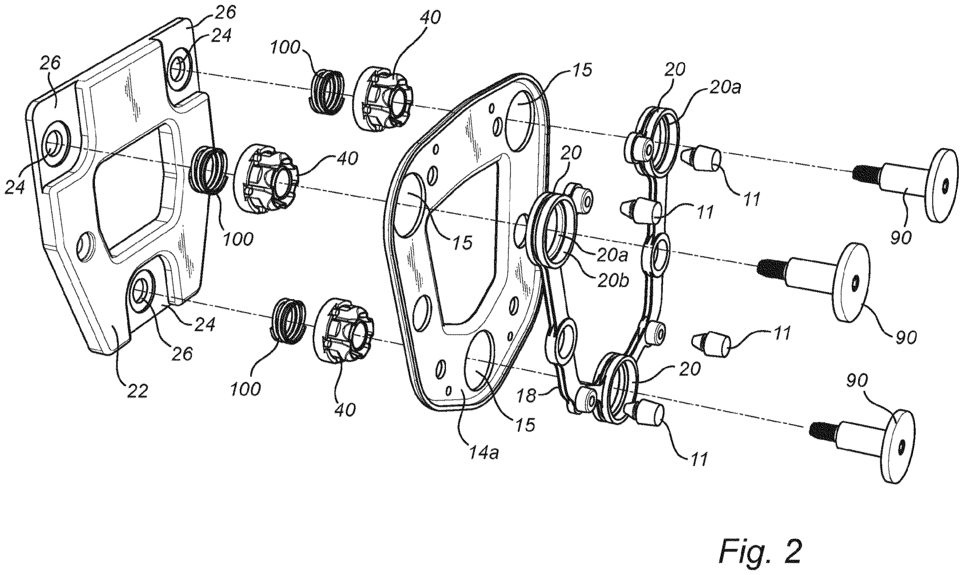

As shown in Figs 2, 3, and 12, the vibration-reducing assembly 6 is arranged on and supported by a base structure 12 fixed to the steering wheel 2. The unwanted vibrations in the steering wheel 2 are thus present in the base structure 12 also. The vibration-reducing assembly 6 comprises a horn plate 14 having a front side and a rear side. The airbag module 10 is mounted on the front side of the horn plate 14. The horn plate 14 may be made from metal. Rubber buffer elements 11 are arranged between the horn plate 14 and the airbag module 10.

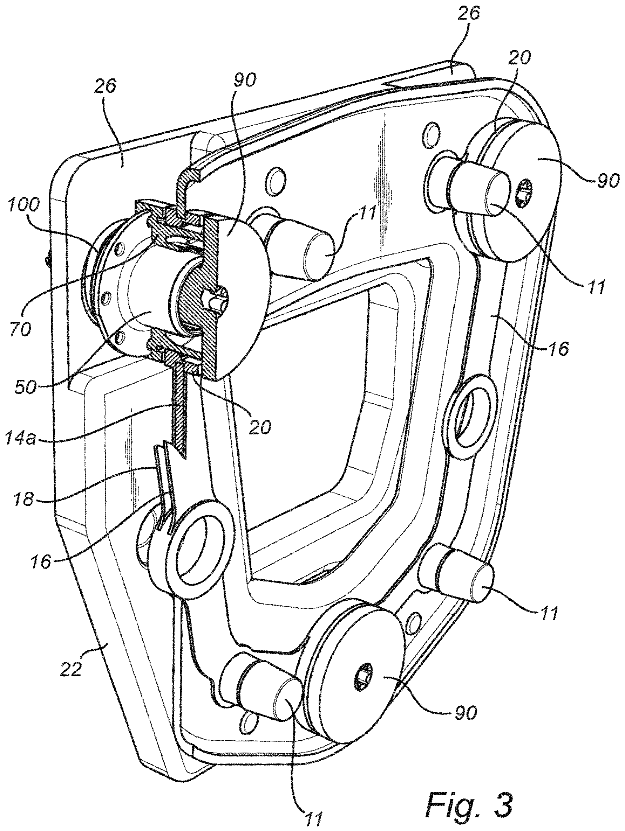

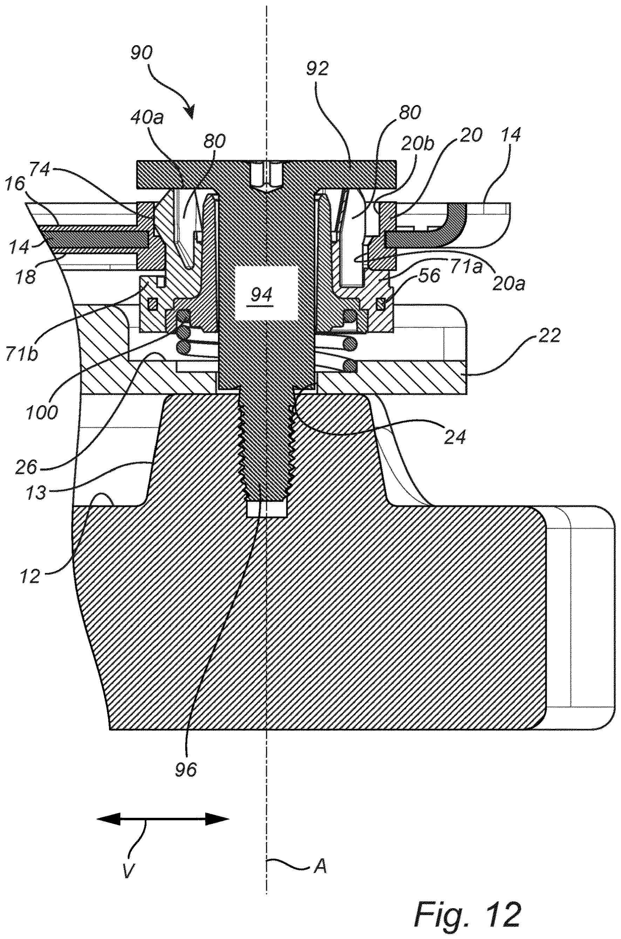

As shown in Fig. 2, the base structure 12 may comprise a plurality of supports 13, projecting towards the horn plate 14 and each provided with a threaded bolt hole. A separate bracket 22 is supported on the supports 13. The bracket 22 is optional. The bracket 22 has an opening 24 aligned with each support 13. Adjacent each opening 24, the bracket 22 presents a horn spring support surface 26 facing the horn plate 14. In the assembled state in Figs 3 and 12, the bracket 22 is supported by and fixed to the supports 13. In alternative embodiments, the bracket 22 is dispensed with.

The bracket 22 may be a multi-function bracket for supporting various components, and may especially comprise parts of the horn switch mechanism of the steering wheel 2. Upon horn activation, the horn plate 14 is pressed towards the bracket 22 for closing an electrical circuit which activates the horn. After a completed horn operation, the horn plate 14 is returned to its normal state by a plurality of horn springs 100.

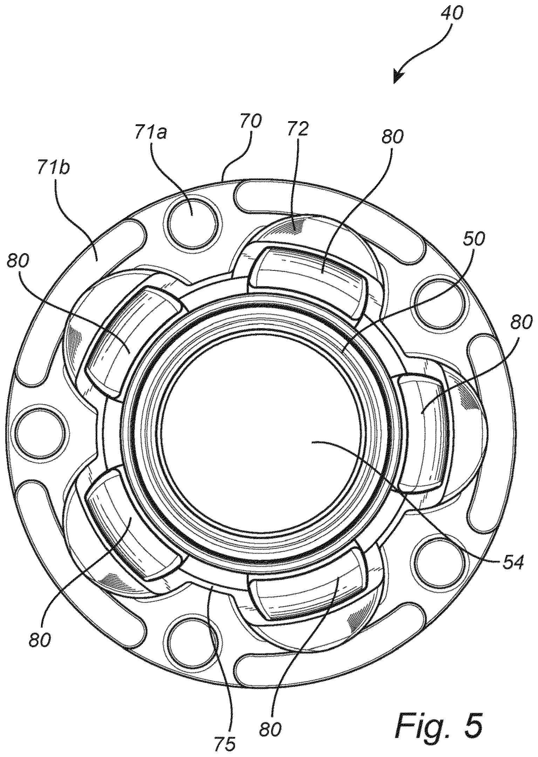

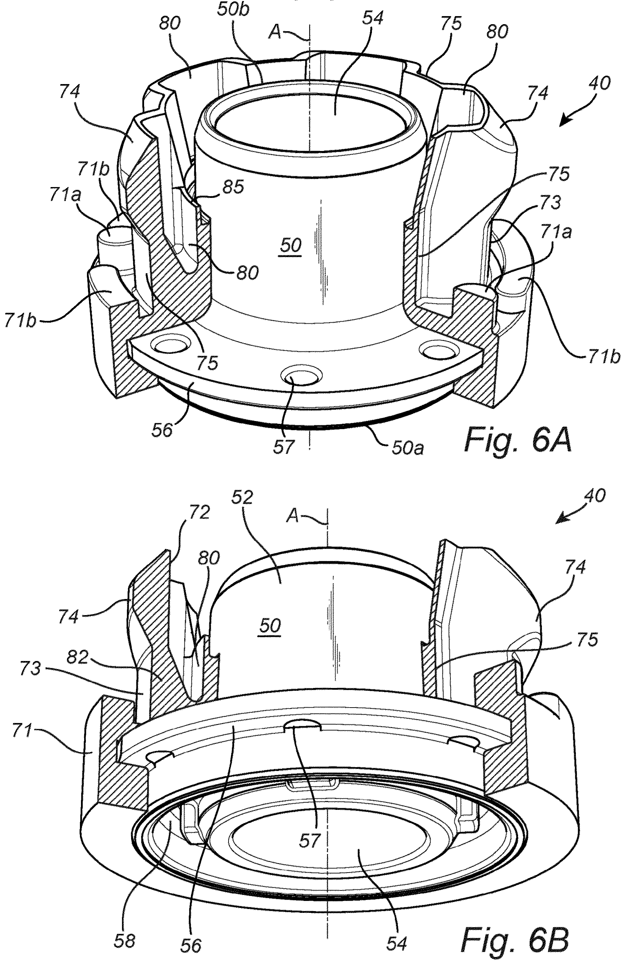

The horn plate 14 together with the airbag module 10 are movably supported on the base structure 12 via three damper units 40. Each damper unit 40 is configured to allow the mass represented at least by the horn plate 14 and the airbag module 10 (i) to move perpendicular to a main axis A of the damper unit 40 for vibration damping purposes, and (ii) to slide along an associated bolt 90 for horn activation purposes. An embodiment of a damper unit 40 will now be described with reference to Fig. 5, Figs 6A and 6B, Figs 7A and 7B, Fig. 8, and Figs 9A to 9D.

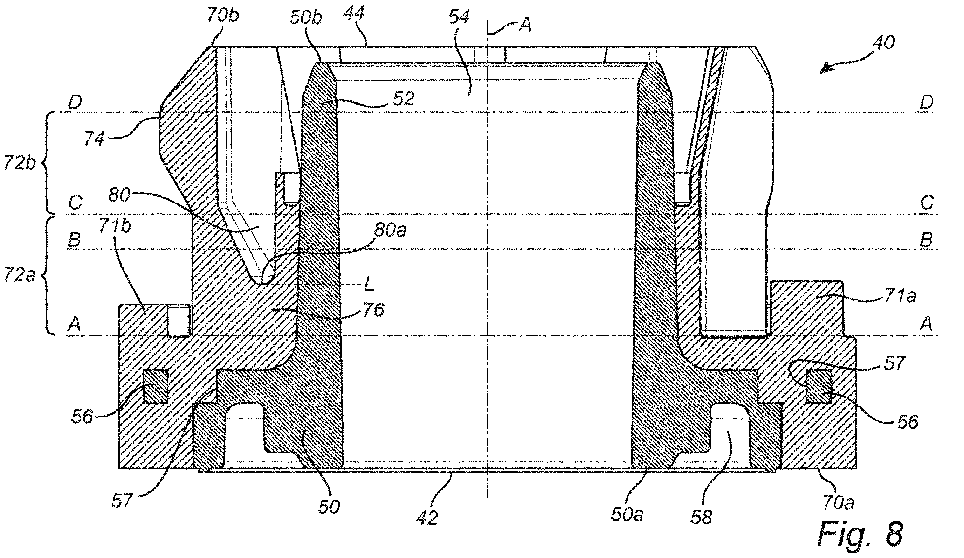

Each damper unit 40 comprises a sleeve-shaped slider 50, and an elastomeric damper element 70. The slider 50 and the elastomeric damper element 70 are bonded together into one damper unit 40, such that these components form a unitary structure ready to be connected to the base structure 12 and the horn plate 14. The components 50 and 70 may be mechanically and/or chemically bonded together, in the sense that they cannot easily be taken apart from each other. Especially, the elastomeric damper element 70 may be molded onto the slider 50. As shown in Fig. 8, the damper unit 40 extends along a main axis A from a rear end 42 to an opposite insertion end 44.

The slider 50 may be made from a relatively rigid material, such as a suitable synthetic resin material. The slider 50 is arranged to slide on a bolt 90 upon horn activation. The slider 50 may be designed as disclosed in WO 2019/129512 A1 mentioned above, to which reference is made for details. The slider 50 comprises a tubular cylindrical part 52, which extends axially from a rear slider end 50a to an opposite insertion slider end 50b, and which defines a through bore 54 for receiving the bolt 90. The cylindrical part 52 is formed in one piece with a radially extending flange 56 presenting one or more locking openings 57 used for mechanically bonding the elastomeric damper element 70 to the slider 50. The flange 56 also serves to take up spring forces from the horn spring 100, and to transfer axial forces between the slider 50 and the elastomeric damper element 70. As shown in Fig. 8, a bottom side of the slider 50 is provided with a ring-shaped space 58 for receiving one end of the horn spring 100. The locking openings 57 are optional. The entire flange 56 is also optional. The slider 50 could just be a cylindrical element.

The elastomeric damper element 70 is arranged on the outer side of the slider 50. The elastomeric damper element 70 is made of an elastomeric material, such as silicone rubber, suitable for use as the elastic spring element in a dynamic damper. The damper element 70 is configured to operate together with the mass represented by at least the airbag module 10 and the horn plate 14 as a spring-mass system forming a frequency-tuned dynamic vibration damper for dampening the vibrations in the base structure 12 and the steering wheel 2.

The elastomeric damper element 70 will now be described in more detail. The elastomeric damper element 70 extends axially from a rear end 70a to an opposite insertion end 70b. While the elastomeric damper element 70 is molded in one piece, it may from a functional aspect be considered to present different functional parts or sections.

At its rear end 70a, the elastomeric damper element 70 has a base or support part 71 which is molded over the flange 56. The dimension of the support part 71 is selected sufficiently large to prevent the support part 71 from passing through the mounting opening 15 during assembly. Thereby, the support part 71 of the elastomeric damper element acts as an insertion stop during the assembly, defining the final mounting position of the damper unit 40 relative to the horn plate 14. In the final assembly shown in Fig. 12, the elastomeric support part 71 is in contact with the rear side of the horn plate 14.

As best shown in Fig. 8, the support part 71 is provided with a plurality of axially extending first studs 71a having a first axial height, and with a plurality of axially extending and interlaced second studs 71b having a second axial height, smaller than the first axial height. The base of the studs 71a and 71b are located at level A-A in Fig. 8. The operation of the studs 71a and 71b is fully described in WO 2019/129512 A1 to which reference is made for details. The first studs 71a are free to move (shear movement) in all directions in the radial plane, and forms contact with the rear side of horn plate 14 as shown in Fig. 12. They serve to decouple the support part 71 from the horn plate 14 during damping operation. The second studs 71b are brought into contact with the horn plate 14 during horn operation. The first studs 71a and the second studs 71b are optional and may be omitted in alternative embodiments. Also, embodiments may include only the first studs 71a.

The elastomeric damper element 70 is further provided with a plurality of axially extending ribs or legs 72. Each rib 72 is an elongate element extending axially in relation to the main axis A of the damper unit 40, and protrudes in radial directions in relation to the axis A. In the illustrated embodiment, there are five ribs 72 only. The ribs 72 are circumferentially distributed about the axis A, and define a corresponding number of axially extending spaces therebetween. As illustrated in Fig. 8, each rib 72 is formed in one piece with the support part 71 and extends axially from the support part 71 to the upper end 70b of the elastomeric damper element 70. From a functional aspect, each rib 72 can be considered to be divided into an axially lower rib section 72a, and an axially upper rib section 72b. As shown in Fig. 8, the lower rib section 72a extends from the upper side of the support part 71 at level A-A up to level C-C. The upper rib section 72b extends from level C-C up to the upper end 70b of the elastomeric damper element 70.

Each lower rib section 72a presents a radially outer engagement surface 73. In the final damper assembly shown in Fig. 12, the outer engagement surface 73 of each rib 72 is in direct engagement with the lower sleeve part 20a of an associated sleeve 20 (and thereby in indirect engagement with the horn plate 14), for transferring vibrations from the base structure 12 to the horn plate 14. With reference to Fig. 8 and Fig. 12, this direct engagement will take place axially between level C-C in Fig. 8 and the top end of the studs 71a. In other embodiments, the sleeves 20 may be dispensed with, and the ribs 72 may be in direct engagement with the horn plate 14.

Each upper rib section 72b presents an increased outer dimension for forming a radially outward extending snap-lock protrusion 74 arranged to hold the damper unit 40 in place in its final mounting position. Each snap-lock protrusion has an upper and a lower beveled surface.

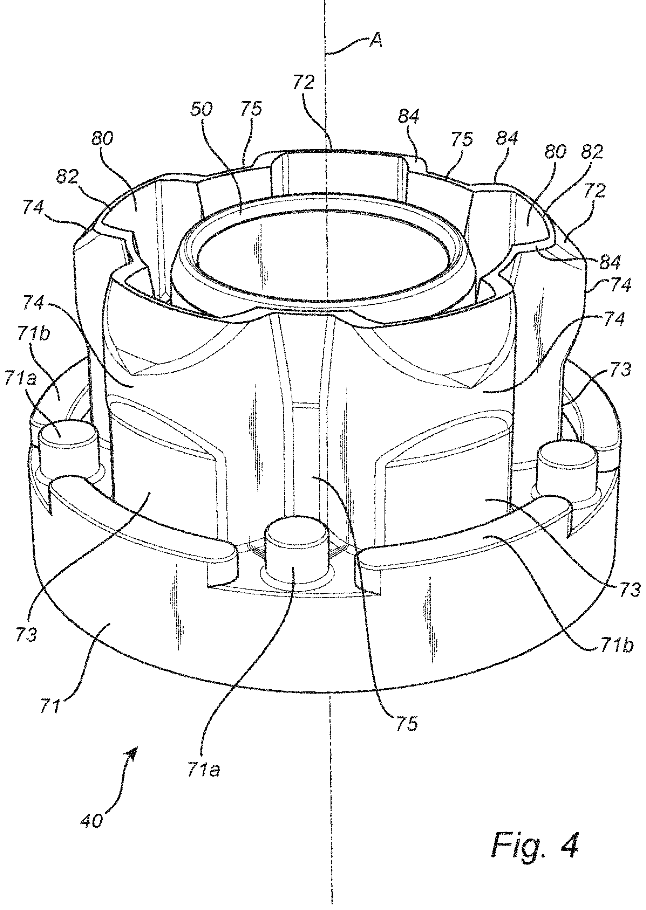

In addition to the support part 71 and the ribs 72, the one-piece elastomeric damper element 70 further comprises a plurality of interconnecting wall portions 75, which are circumferentially arranged between the ribs 72. In the illustrated embodiment, each interconnecting wall portion 75 is shaped as an axially extending elongate, relatively thin wall. Each interconnecting wall portion 75 interconnects two adjacent ribs 72, along the whole length of the ribs 72 as illustrated, or in other embodiments along one or more axial parts of the ribs 72. In preferred embodiments, each interconnecting wall portion 75 extends axially from the base part 71 at least along the length of the lower rib section 72a. In preferred embodiments as the one illustrated, the length of the interconnecting wall portions 75 is selected such that they extend axially also over at least part of the upper rib sections 72b. As shown in Fig. 4, in the illustrated embodiment the interconnecting wall portions 75 extend all the way to the top of the upper rib sections 72b.

In preferred embodiments as the one illustrated, a lower part of each interconnecting wall portion 75 interconnecting the lower rib portions 72a is in direct contact with the slider 50. This may be along the entire length of the lower rib section 72a. In preferred embodiments as the one illustrated, an upper part of each interconnecting wall section 75 interconnecting the upper rib portions 72b is radially spaced from the slider 50 as shown in e.g. Fig. 4.

According to the inventive concept, in order to increase the flexibility of the elastomeric damper element 40 and, thereby, to be able to reach lower tuning frequencies, each rib 72 is provided with an inner cavity 80. The inner cavity 80 is located at least in part in the lower rib section 72a, radially inside the outer engagement surface 73 of the rib 72. The axial location of the inner cavity 80 is selected such that at least a part of the inner cavity 80 is located at an axial level where the damping operation mainly occurs, which is at the lower rib section 72 where the vibrations are transferred to the horn plate 14. However, the axial length of the inner cavity 80 may also be selected such that the inner cavity 80 extends also axially up into the upper rib section 72b, and optionally all the way to the upper end 70b of the elastomeric damper element 70, as in the illustrated embodiment.

The inner cavity 80 is open towards the insertion end 40b of the damper unit 40, and is closed at a cavity bottom 80a towards the rear end 40a of the damper unit 40. With reference to Fig. 8, the cavity bottom 80a is located at an axial level L in or below the lower rib section 72a. In general, it is preferred that the cavity bottom 80a is not located in the axial region where the damping operation mainly takes place, which is in the axial interval between the ends of the studs 71a and level C-C. In order to increase the structural strength of the elastomeric damper element 70, the lower rib section 72a may present a cavity-free, solid elastomeric part 76 in the axial region between the cavity bottom 80a and the upper side of the support part 71 at level A-A.

The inner cavity 80 of each rib 72 is defined at least by a radially outer wall portion 82, which extends in the circumferentially direction and is radially spaced from the slider 50, and by two circumferentially spaced side wall portions 84 which extend from the outer wall portion 82 towards the slider 50. The radially outer wall portion 82 is curved to form the engagement surface 73 to engage the inside of the sleeve 20. The convex curvature is adapted to the concave curvature or radius of a lower part 20a of the sleeve 20 of the horn plate 14. In preferred embodiments as the one illustrated, also the two side wall portions 84 are curved, more specifically convex outwards from the inner cavity 80. These three wall portions 82, 84 of each rib 72 form an essentially U-shaped, continuous wall defining at least part of the inner cavity 80. The axial length of these wall portions 82, 84 will typically correspond to the axial length of the inner cavity 80 defined by these wall portions. Thus, the radially outer wall portion 82 and the two side wall portions 84 of each rib 72 may as illustrated extend axially along both the lower rib section 72a and the upper rib section 72b, all the way up to the top end of the rib 72. In other embodiments, the cavity defining wall portions 82, 84 may have a shorter axial length, for instance limited to the lower rib section 72a. As a non-limiting example, the wall thickness of the wall portions 82, 84 may be in the range of 0,5 mm to 2,0 mm. As for the overall size of the damper unit 40, it may as an example have an axial length of 12 mm and an outer diameter of 24 mm.

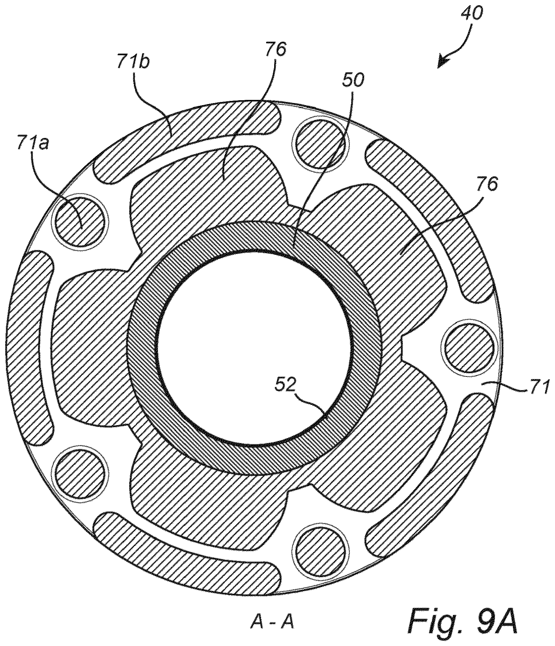

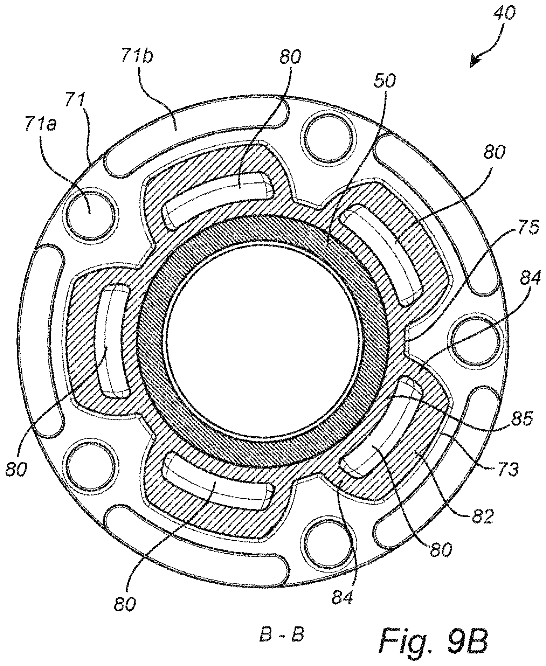

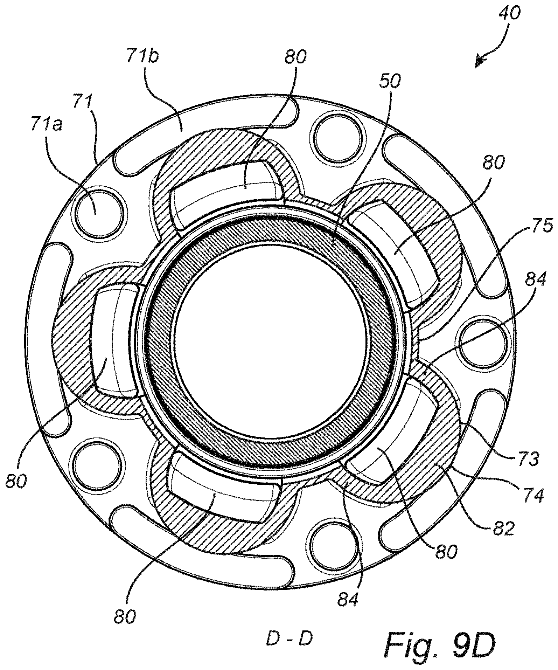

Each interconnecting wall portion 75 is integrally formed with two adjacent side wall portions 84 of two adjacent ribs 72. The overall structure of the elastomeric damper element 70 will thereby present a circumferentially continuous wall formed by the outer wall portions 82, the side wall portions 84, and the interconnecting wall portions 75. This continuous wall 82, 84, 75 will have an undulating shape with ridges and valleys when seen in cross-section, e.g. as seen in the cross-section B-B in Fig. 9B.

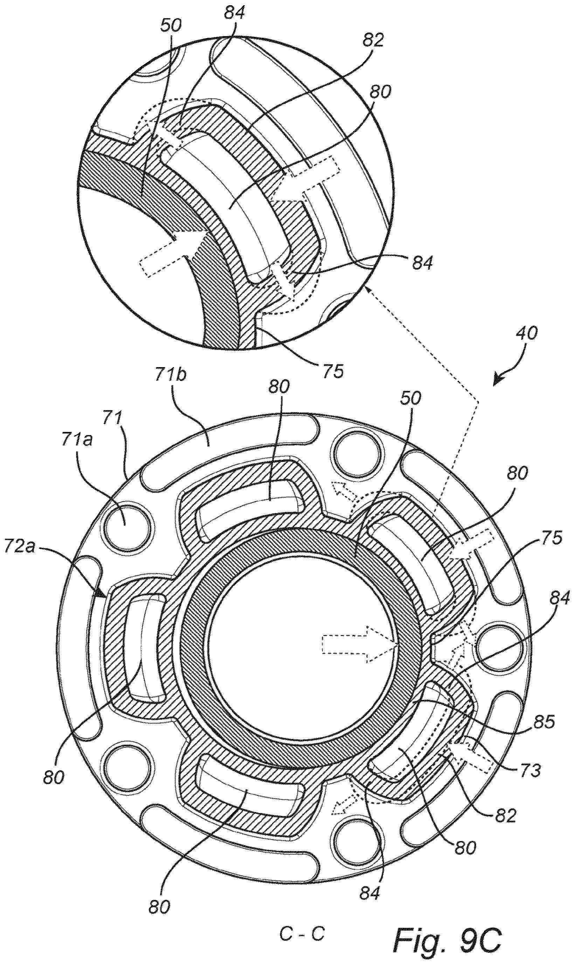

In order to increase the flexibility and, thereby, to lower the tuning frequency, the two side wall portions 84 of each rib 72 may diverge in a circumferential direction from each other towards the slider 50, as seen for instance in the cross-section C-C in Fig. 9C. The diverging shape may be on the outer side and/or on the inner side of the side wall portions 84. Especially, the inner cavity 80 may have a diverging shape towards the slider 50.

In order to increase the flexibility and thereby lower the tuning frequency, the two side wall portions 84 of teach rib 72 may have an outwardly convex shape as in the illustrated embodiment. Such a shape also maximize the size of the inner cavity, giving more flexibility in frequency tuning the damper unit.

In the illustrated embodiment, the part of the inner cavity 80 which is located in the lower rib section 72a is further defined by a radially inner wall portion 85, which is in contact with the radially outer surface of the slider 50. In the illustrated embodiment, the radially inner wall portion 85 is axially limited to the lower rib section 72a. In the upper rib section 72b, the inner cavity 80 is also present, but here open radially inwards towards the slider 50. The upper rib section 72b is inclined radially outwards from the slider 50, leaving a space therebetween into which the upper rib section 72b may flex or bend during the insertion and mounting operation. In alternative embodiments, the inner radial wall portion 85 may be dispensed with.

At present, overmolding is considered a preferred molding method, but other techniques may also be considered, such as 2K injection molding where the slider 50 and the elastomeric damper element 70 are manufactured using one single 2K injection molding machine. In preferred embodiments, the elastomeric damper element 70 is not only molded on the slider 50 but is also bonded to the slider 50. The bonding may be mechanical (including frictional bonding) and/or chemical. In some embodiments, the damper element 70 may be chemically bonded to the slider 50 by adhesion. It is also possible to use both mechanical bonding as disclosed in the drawings, and chemical adhesion. It is also possible to rely on frictional bonding, only or in part. Frictional bonding may be obtained by a post-molding shrinking of the elastomeric material.

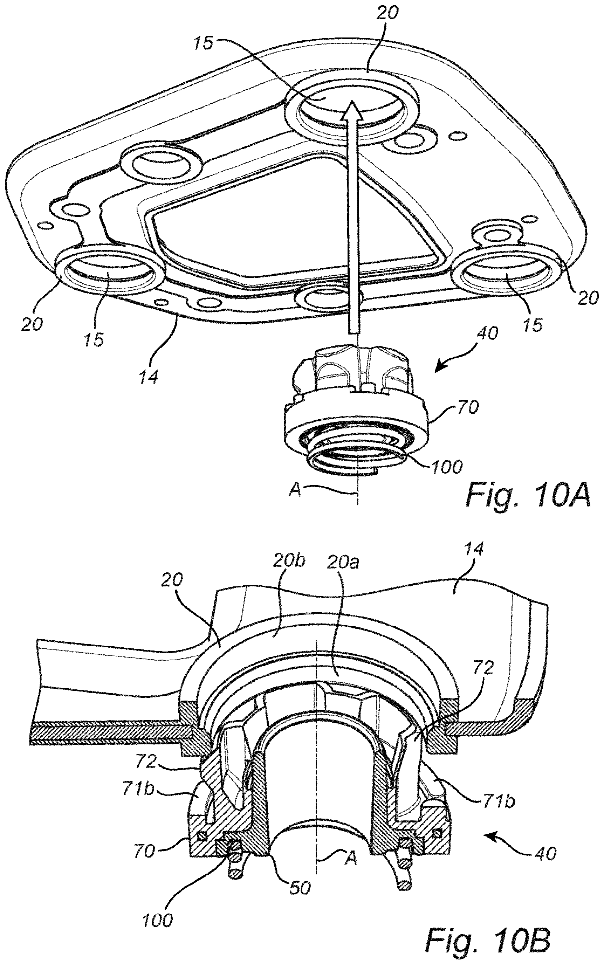

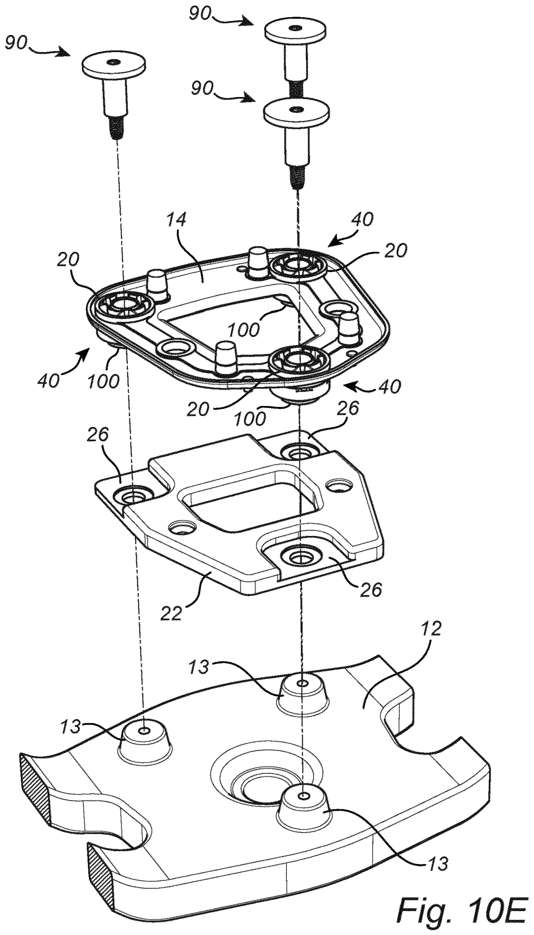

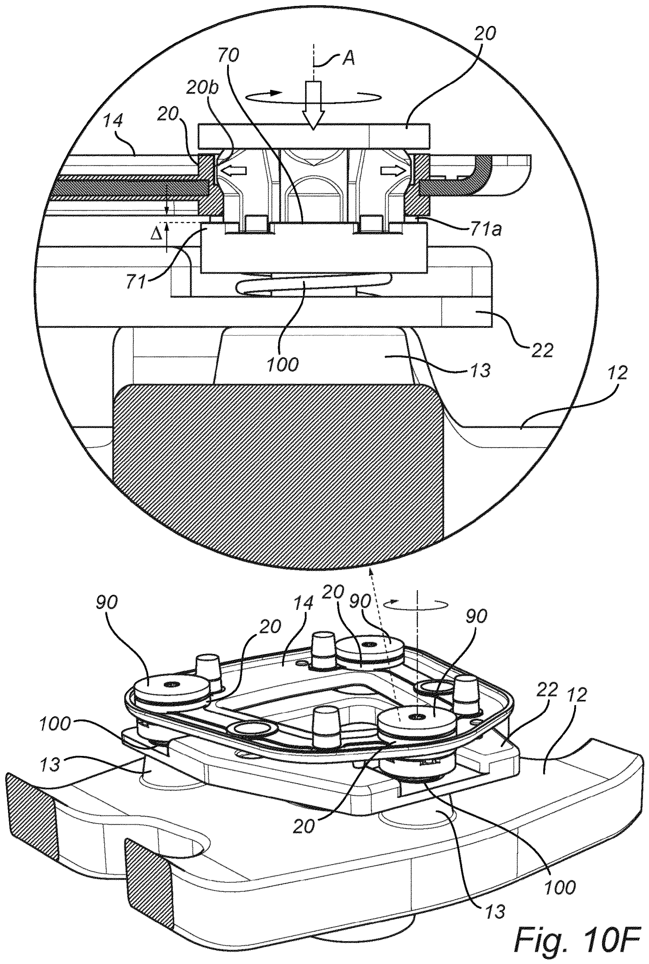

A method for assembling the vibration-reducing assembly 6 using a number of the damper units 40 described above will now be described with reference to Figs 10A to 10F, and Fig. 12. The sequence or order of the assembly steps may be varied. The bracket 22 is placed upon the supports 13 of the base structure 12 (Fig. 10E). Each damper unit 40 is inserted from below into an associated mounting opening 15 of the horn plate 14 (Figs 10A-10D).

The slider 50 and the elastomeric damper element 70 are inserted together as a single unit 40, and from one side only of the horn plate 14 (Fig. 10A). During the insertion of the damper element 70, the radially outer engagement surfaces 73 of lower rib sections 72a are brought into engagement with the lower sleeve part 20a of the corresponding sleeve 20, such that steering wheel vibrations V indicated in Fig. 12 may be transferred from the elastomeric damper element 70 to the horn plate 14. Optionally, the dimensions are selected such that the lower rib parts 70a are somewhat deformed between the slider 50 and the sleeve 20 in response to the insertion.

During the insertion of damper unit 40, the support part 71 of the elastomeric damper element 70 will engage the bottom side of the horn plate 14, defining the final insertion position shown in Fig. 12. More specifically, the final insertion position is reached when the ends of the first studs 71a are brought into engagement with the rear side of the horn plate 14.

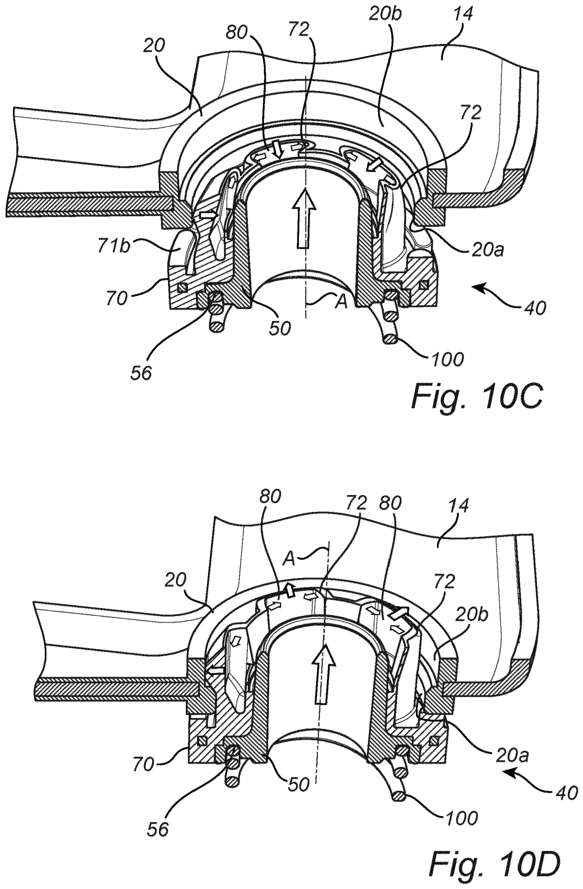

During the insertion of the damper unit 40, the snap-lock protrusions 74 of the damper element 70 will be temporarily compressed in order to pass the sleeve 20, as schematically shown at the arrows in Fig. 10C. In the final mounting position, the snap-lock protrusion 74 will expand (Fig. 10D) and engage the larger upper portion 20b of the sleeve 20. Thereby, the support part 71 and the snap-lock protrusions 74 will together ensure that the damper element 70 is held correctly axially positioned and locked in relation to the horn plate 14. No separate locking elements are needed, and the axial locking is automatically obtained during the one-sided insertion of the damper unit 40.

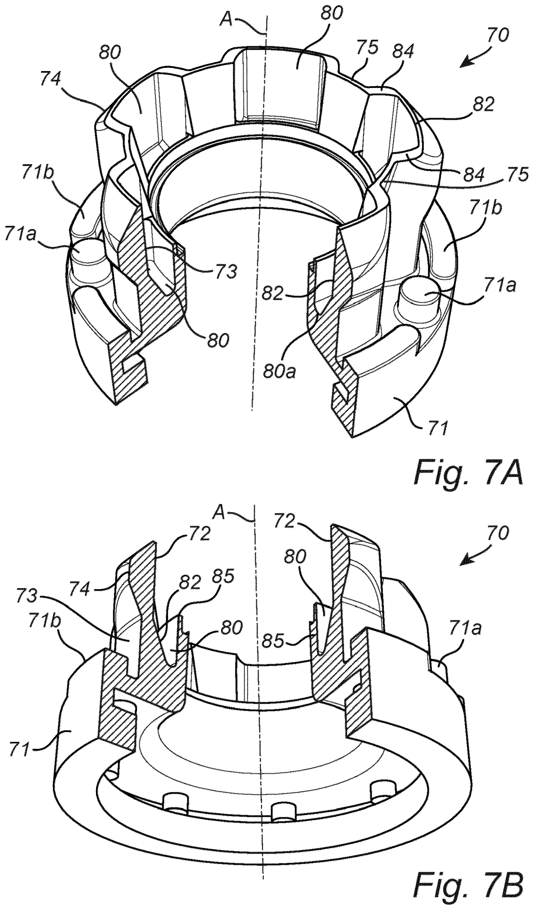

When the damper elements 70 have been correctly positioned in the horn plate 14, a bolt 90 may be inserted into the bore 54 of each slider 50. Each bolt 90 has a bolt head 92, a cylindrical guide shaft 94 and a threaded end 96. The tubular part 52 of the slider 50 may slide along the guide shaft 94. As shown in Fig. 7, the bolts 90 are secured in the bolt holes of the supports 13 of the base structure 12. During the final fastening of each bolt 90, a pre-compression of the corresponding horn spring 100 may occur.

The general vibration damping function of the damper assembly 6 is as follows: steering wheel vibrations V (Fig. 12) occurring in the steering wheel 2 and the base structure 12 are transferred via the bolts 90 and the sliders 50 to the elastomeric damper elements 70. The elastomeric damper elements 70 in their turn transfer the vibrations V to the horn plate 14 via the sleeves 20, thereby causing the mass (represented by the weight of the horn plate) to vibrate out of phase such that the vibrations V in the steering wheel 2 are dynamically dampened.

During the vibration dampening, the lower rib sections 72a will be subjected to alternating elastomeric deformation. With reference to Fig. 9C, when a lower rib section 72a is moving towards the sleeve 20 during a damping operation, the lower rib section 72a will be elastically deformed by bending (flexing), and the shape of the inner cavity will be deformed accordingly. More specifically, when the whole damper unit 40 is temporarily moving towards the sleeve 20 in one direction due to the vibrations, e.g. to the right in the enlarged view in Fig. 9C, the radially outer wall portion 82 of the rightmost ribs 72 will be pressed against the lower section 20a of the sleeve 20. As a result, the two side wall portions 84 of the ribs 72 will be elastically deformed by bending (flexing) outwardly into an increased curvature, as schematically illustrated in Fig. 9C with dashed lines. Preferably, there will be no relative movement between the radially outer wall portion 82 and the sleeve 20. A certain degree of shear movement may also take place. No or very little compression will take place. The amount of bending of the side walls 84 could be different from the amount schematically indicated by the dashed lines, which are provided for explanation purposes only. The shape of the inner cavity 80 will be deformed accordingly. When the damper unit 40 thereafter is moving to the left due to the vibrations, the deformed rib 72 will elastically return to its initial shape.

### Alternatives

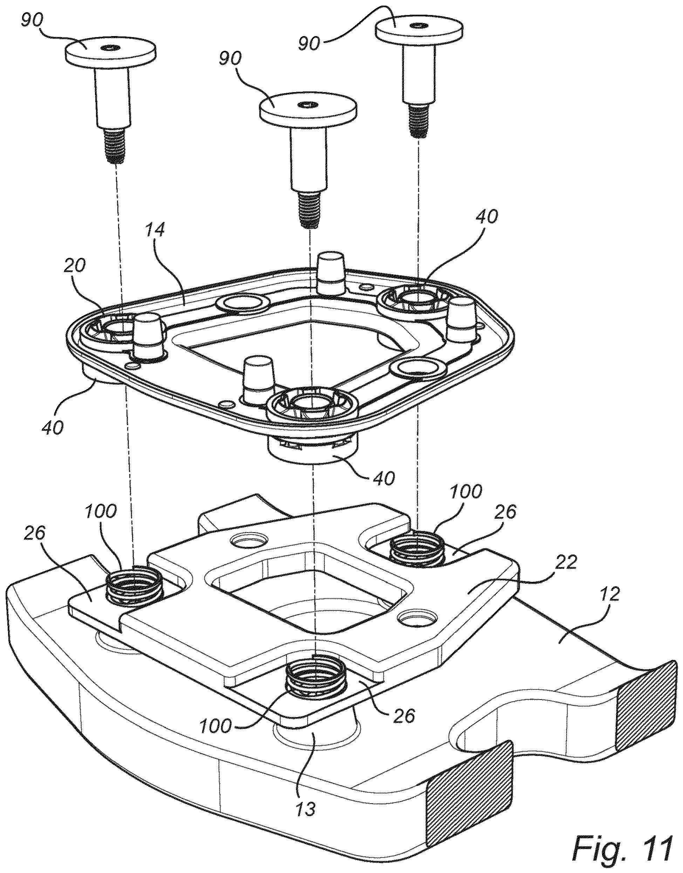

Figs 11 illustrates a second embodiment of a method for assembling a vibration damper assembly 6 comprising three damper units 40. In this embodiment, each damper unit 40 is mounted to the horn plate 14 as described above, but without the separate horn springs 100 attached to the damper units 40. The horn springs 100 are instead placed separately from the damper units 40 on the bracket surfaces 26 of bracket 22. Thereafter, the horn plate 14 with the mounted damper units 40 is placed upon the horn springs 100. Finally, the bolts 90 are inserted and tightened.

In alternative embodiments, the elastomeric damper element 70 and the mounting openings 15 may have a non-circular cross-section, as an oval cross section. This may be used for obtaining different damping properties in different directions.

In alternative embodiments, the shape and dimensions of the inner cavities may be different than as illustrated. As one alternative, the inner cavity 80 be confined to the lower rib section 72a. In some alternatives, the radially inner wall 85 may extends up into the upper rib section 72b with no space between the upper rib section 72b and the slider 50. In further alternative embodiments, the cross-section of the inner cavity 50 may be essentially constant along the entire lower rib section 72a, instead as converging downwards to the cavity bottom 80a as illustrated.

In alternative embodiments, the damper unit may comprise, in addition to the ribs provided with inner cavities, further ribs with no inner cavities.

In alternative embodiments, the slider is not provided with a flange, and is instead formed as a straight cylinder. The locking openings in the flange are also optional.

Alternative embodiments of the damper assembly do not include the bracket 22.

## Claims

1. A damper unit (40) for use in a frequency-tuned vibration damper assembly for a steering wheel (2), said damper unit (40) extending along an axis (A) between an insertion end (40b) and a rear end (40a) of the damper unit (40), said damper unit (40) being configured to be inserted into a mounting opening (15) provided in a horn plate (14) of said damper assembly, and said damper unit (40) comprising a slider (50) having an axially extending inner bore (54), and an elastomeric damper element (70) formed on an outer surface of the slider (50);
wherein the elastomeric damper element (70) presents a plurality of ribs (72) extending axially along said axis (A) and being mutually spaced in a circumferential direction in relation to said axis (A), each rib (72) of said plurality of ribs (72) comprising, along its axial direction:
○ an axially upper rib section (72b) provided with a snap-lock protrusion (74) configured to snap-lock the damper unit (40) in a final mounting position, and
○ an axially lower rib section (72a) axially spaced from the insertion end (40b) of the damper unit (40), wherein the lower rib sections (72a) of said plurality of ribs (72) together form an outer engagement surface (73) of the damper unit (40) configured to be brought into engagement with an inner surface (20a) of said mounting opening (15); and
wherein each rib (72) is provided with an inner cavity (80), which is located at least in part in the lower rib section (72a) radially inside said outer engagement surface (73), and which is axially open towards the insertion end (40b) of the damper unit (40) and axially closed (80a) towards the rear end (40a) of the damper unit (40).

2. The damper unit (40) according to claim 1, wherein the inner cavity (80) of each rib (72) is defined at least in part by a radially outer wall portion (82) radially spaced from the slider (50), and two circumferentially spaced side wall portions (84) which extend from the outer wall portion (82) towards the slider (50), and wherein the radially outer wall portion (82) and the two side wall portions (84) of each rib (72) are located at least in the lower rib section (72a).

3. The damper unit (40) according to claim 2, wherein the radially outer wall portion (82) and the two side wall portions (84) of each rib (72) extend axially into the upper rib section (72a), such that the inner cavity (80) of each rib (72) also extends axially from the lower rib section (72a) into the upper rib section (72b).

4. The damper unit (40) according to claim 2 or 3, wherein the two side wall portions (84) diverge in a circumferential direction from each other towards the slider (50).

5. The damper unit (40) according to any of claims 2 to 4, wherein the radially outer wall portion (82) has a radial wall thickness which in the lower rib section (72a) increases towards the rear end (40a) of the damper unit (40).

6. The damper unit (40) according to any claims 2 to 5, wherein at least part of the inner cavity (80) of each rib (72) is further defined by a radially inner wall portion (85) of the rib (72) which is in contact with the outer surface of the slider (50).

7. The damper unit (40) according to claim 6, the radially inner wall portion (85) of each rib (72) has a limited axial length such that part of the inner cavity (80) is radially open inwards towards the slider (50)

8. The damper unit (40) according to any of the preceding claims, wherein the inner cavity (80) of each rib (72) presents an axially closed cavity bottom (80a) located in the lower rib section (72a).

9. The damper unit (40) according to claim 8, wherein the lower rib section (72a) of each rib (72), axially below the cavity bottom (80a), comprises a volume (76) of solid, cavity-free elastomeric material.

10. The damper unit (40) according to any of the preceding claims, wherein the elastomeric damper element (70) further comprises a plurality interconnecting wall portions (75), which are circumferentially arranged between the ribs (72), and wherein each interconnecting wall portion (75) interconnects a pair of circumferentially adjacent ribs (72).

11. The damper unit (40) according to claim 10, wherein each interconnecting wall portion (75) of said plurality of interconnecting wall portions (75) interconnects both the lower rib sections (72a) and the upper rib sections (72b) of each pair of circumferentially adjacent ribs (72).

12. The damper unit (40) according to any of the preceding claims, wherein the inner cavity (80) of at least some of the ribs (72), as seen in a radial cross-section perpendicular to said axis (A), is diverging towards the slider (50).

13. The damper unit (40) according to any of the preceding clams, wherein the elastomeric damper element (70) further comprises an elastomeric support part (71) located at the rear end (40a) of the damper unit (40), and wherein the radially outer engagement surface (73) of the damper unit (40) has a first radial dimension, and the elastomeric support part (71) has a second radial dimension, larger than said first radial dimension, whereby the elastomeric support part (71) is arranged to define a final mounting position of the damper unit (40).

14. A frequency-tuned damper assembly for dampening vibrations (V) in a steering wheel (2), comprising:
a base structure (12) which is fixed to a steering wheel (2);
a horn plate (14);
one or more damper units (40) according to any of claims 1 to 13, each damper unit (40) being arranged in an associated mounting opening (15) in the horn plate (14) with its outer engagement surface (73) in engagement with an inner side of the mounting opening (15) for transferring said vibrations to the horn plate (14);
one or more guide shafts (94), each guide shaft (94) being fixed (96) to the base structure (12) and being received in the central bore (54) of the slider (50) of an associated damper unit (40); and
an airbag module (10) which together with the horn plate (14) forms a mass (10, 14) which is supported by the base structure (12) via the damper units (40) for allowing movement of the mass transverse to said axis (A),
wherein the damper units (40) and the mass (10, 14) are configured to operate as a frequency-tuned spring-mass system for dynamically dampening vibrations in the base structure (12).

15. The frequency-tuned damper assembly according to claim 14, further comprising a plurality of horn springs (100), wherein each horn spring (100) is in engagement with an associated damper unit (40) for moving the damper unit (40) back to a normal position on the slider (50) after a completed horn operation.
